(19) Europäisches Patentamt
European Patent Office
Office européen des brevets

(11) **EP 3 106 318 B1**

(12) **FASCICULE DE BREVET EUROPEEN**

(45) Date de publication et mention
de la délivrance du brevet:
**17.01.2018 Bulletin 2018/03**

(51) Int Cl.:
***B60B 27/00*** *(2006.01)*

(21) Numéro de dépôt: **16173050.2**

(22) Date de dépôt: **06.06.2016**

(54) **MOYEU DE PALIER À ROULEMENT INTÉGRANT UNE GORGE D'ANCRAGE**

NABE EINES WÄLZLAGERS, DIE EINE VERANKERUNGSNUT UMFASST

ROLLER-BEARING HUB INCLUDING AN ANCHORING GROOVE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2015 FR 1555603**

(43) Date de publication de la demande:
**21.12.2016 Bulletin 2016/51**

(73) Titulaire: **NTN-SNR Roulements
74010 Annecy (FR)**

(72) Inventeurs:
• **TEILLOU, Cyprien
74000 Annecy (FR)**
• **GUILLAUME, Sébastien
74000 Annecy (FR)**
• **LENON, Hervé
74540 Gruffy (FR)**

(74) Mandataire: **Sayettat, Julien Christian et al
Strato-IP
63, Boulevard de Ménilmontant
75011 Paris (FR)**

(56) Documents cités:
**EP-A1- 1 859 958      EP-A1- 2 754 906
EP-A1- 2 863 082      CN-A- 103 925 284**

## Description

L'invention concerne un moyeu de palier à roulement, ainsi qu'un palier à roulement comprenant un tel moyeu et un organe extérieur disposé autour dudit moyeu pour le montage en rotation relative de deux éléments.

L'invention s'applique plus particulièrement au montage d'un élément roulant de véhicule notamment automobile sur un élément de suspension dudit véhicule, ledit élément roulant comprenant notamment une roue et un disque de frein.

Pour le montage d'un tel élément roulant, on connaît des paliers dans lesquels l'organe extérieur et le moyeu portent chacun au moins une piste de roulement qui sont disposées en regard pour réaliser au moins un chemin de roulement dans lequel une rangée de corps roulants est disposée afin de permettre la rotation relative du moyeu et de l'organe extérieur (pour exemple dans EP 2 863 082 A). Selon une réalisation, le moyeu comprend un fût autour duquel l'organe extérieur est monté en rotation et un flasque de fixation qui est disposé autour dudit fût. Ainsi, en associant l'organe extérieur à un élément de suspension du véhicule, on peut monter en rotation l'élément roulant en le fixant au flasque.

De par l'intégration des différentes fonctions et des sollicitations mécaniques qui en résultent, les paliers à roulement sont relativement massifs, ce qui pose des problèmes de poids, d'encombrement et de coûts.

Pour résoudre ces problèmes, on a proposé d'utiliser un matériau plus léger que l'acier à roulement qui est classiquement utilisé, par exemple à base de matériau composite. Mais, ce remplacement se fait au détriment de la résistance mécanique et il n'est donc envisageable qu'au niveau des parties du palier les moins contraintes mécaniquement, tel qu'un noyau comprenant le flasque de fixation lorsqu'il n'est pas sollicité par les pressions de roulement des corps roulants.

Toutefois, l'utilisation d'un tel noyau composite peut s'avérer insuffisant pour des sollicitations d'amplitude importante. En particulier, durant l'utilisation du moyeu, le flasque est fortement sollicité, notamment du fait des charges exercées par l'élément tournant, ce qui peut entraîner des efforts de déplacement du noyau composite, notamment relativement à un fût réalisé en acier, conduisant alors à un risque de décohésion du moyeu.

L'invention a pour but de perfectionner l'art antérieur en proposant notamment un moyeu de palier à roulement utilisant un noyau composite pour optimiser le compromis entre la masse et la résistance mécanique, ledit moyeu étant notamment agencé pour améliorer la fiabilité sous charge de la cohésion du noyau dans ledit moyeu.

A cet effet, selon un premier aspect, l'invention propose un moyeu de palier à roulement comprenant un fût structurel auquel est surmoulé un noyau composite réalisé à base d'au moins une résine polymère, ledit noyau présentant un flasque et un embout qui sont disposés respectivement autour et dans un alésage dudit fût, l'alésage présentant au moins une gorge qui s'étend circonférentiellement sur sa paroi périphérique en formant deux portées radiales, l'embout présentant un bourrelet complémentaire qui est surmoulé dans ladite gorge pour assurer un ancrage dudit embout dans ledit alésage.

Selon un deuxième aspect, l'invention propose un palier à roulement pour le montage en rotation relative de deux éléments, ledit palier comprenant un tel moyeu et un organe extérieur disposé autour dudit moyeu, ledit organe extérieur et le fût structurel dudit moyeu portant chacun au moins une piste de roulement qui sont disposées en regard pour réaliser au moins un chemin de roulement dans lequel une rangée de corps roulants est disposée afin de permettre la rotation relative du moyeu et de l'organe extérieur.

D'autres objets et avantages de l'invention apparaîtront dans la description qui suit, faite en référence aux figures annexées, dans lesquelles :

- la figure 1 représente en coupe longitudinale un moyeu d'un palier à roulement selon un mode de réalisation de l'invention, la figure 1a étant une vue agrandie d'une partie de la figure 1 ;
- la figure 2 représente une vue agrandie d'une partie de la figure 1a, montrant plus particulièrement l'agencement géométrique de l'ancrage de l'embout dans l'alésage.

En relation avec ces figures, on décrit ci-dessous un palier à roulement pour le montage en rotation relative de deux éléments, ledit palier comprenant un moyeu 1 et un organe extérieur (non représenté) disposé autour dudit moyeu. Dans la description, les termes « extérieur » et « intérieur » sont définis par rapport à l'axe A de rotation du palier, respectivement pour une localisation éloignée et proche dudit axe.

Dans le mode de réalisation représenté, le palier est destiné au montage d'un élément roulant de véhicule notamment automobile sur un élément de suspension dudit véhicule, ledit élément roulant comprenant notamment une roue et un disque de frein.

Pour ce faire, le moyeu 1 comprend un fût structurel 2 monté tournant dans l'organe extérieur et autour duquel est associé un flasque 3 de fixation de l'élément roulant, l'organe extérieur présentant des moyens d'association à un élément de suspension du véhicule. Toutefois, l'invention n'est pas limitée à une telle application et peut s'appliquer à un montage dans lequel l'organe extérieur est tournant et le moyeu 1 est fixe.

De façon avantageuse, la périphérie du fût 2 est agencée pour permettre le montage en rotation autour d'elle d'au moins un organe extérieur du palier à roulement. En particulier, la périphérie du fût 2 et l'organe extérieur portent chacun au moins une piste de roulement 4 qui sont disposées en regard pour réaliser au moins un chemin de roulement dans lequel une rangée de corps roulants est disposée afin de permettre la rotation relative du moyeu 1 dans l'organe extérieur.

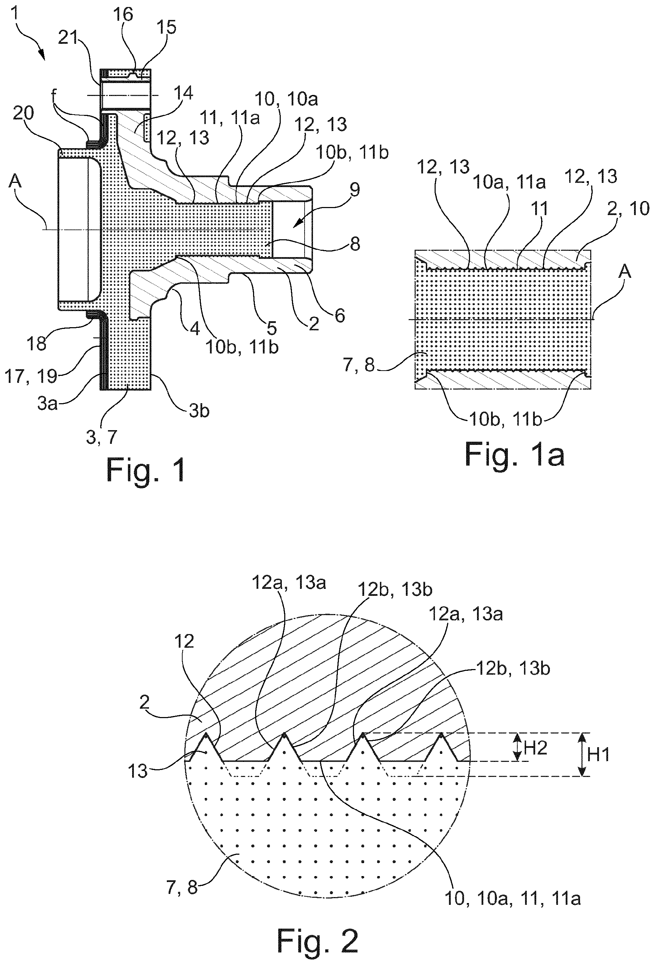

Dans le mode de réalisation représenté, le fût 2 présente une piste de roulement externe 4 et une portée interne 5 destinée à recevoir une bague sur laquelle une piste de roulement interne est formée, le bord libre 6 de ladite portée pouvant être replié pour former une collerette de précharge axiale de ladite bague sur la périphérie du fût 2. Dans la description, les termes « externe » et « interne » sont définis par rapport au montage du palier sur le véhicule, respectivement à gauche et à droite sur la figure 1.

En particulier, le moyeu 1 comprend un noyau 7 qui est associé par surmoulage au fût structurel 2 et qui présente, en plus du flasque 3, un embout 8 qui est disposé dans un alésage dudit fût, afin d'améliorer la cohésion du moyeu 1.

Le fût 2 et le noyau 7 sont réalisés en deux pièces qui peuvent être chacune optimisées, notamment au niveau du matériau les constituant, relativement aux efforts mécaniques auxquels elles doivent résister. De façon avantageuse, le fût 2 peut être réalisé dans un matériau métallique, notamment en acier à roulement de type 100Cr6, pour supporter les pressions de contact de roulement.

Par ailleurs, pour optimiser le poids du palier tout en supportant les contraintes mécaniques venant de l'élément roulant, le noyau 7, et donc le flasque 3, est réalisé à base d'un matériau composite formé d'une résine polymère, par exemple à base d'une résine époxy. En outre, le flasque 3 peut présenter des évidements qui sont agencés pour diminuer son poids sans compromettre sa tenue mécanique.

En particulier, le noyau 7 peut être réalisé à base d'au moins une résine polymère chargée en fibres, par exemple des fibres de carbone, lesdites fibres étant notamment dispersées aléatoirement dans ladite résine. En effet, un tel matériau composite peut supporter des sollicitations diverses, ce qui permet d'absorber en partie les contraintes subies par le noyau 7 lors de l'utilisation du moyeu 1, et donc d'assurer une bonne association du noyau 7 au fût 2 en limitant les déformations résultant desdites contraintes.

Toutefois, un tel matériau composite peut s'avérer insuffisant pour des sollicitations d'amplitude plus importante. En particulier, durant l'utilisation du moyeu 1, le flasque 3 est fortement sollicité, du fait des charges exercées par l'élément tournant, ce qui peut entraîner des déformations dudit flasque qui peuvent conduire, notamment par déplacements de l'embout 8 dans l'alésage 9, à une décohésion du moyeu 1.

Par ailleurs, du fait des charges exercées par les pistes de roulement, le fût structurel 2, et donc l'embout 8, sont également sollicités, ce qui peut avoir un impact négatif sur l'interface entre l'embout 8 et l'alésage 9, et donc sur l'association dudit embout dans ledit alésage.

Pour pallier ces inconvénients, l'embout 8 et/ou l'alésage 9 peut présenter un moyen géométrique d'ancrage dudit embout dans ledit alésage, afin d'améliorer le maintien axial dudit embout dans ledit alésage. En relation avec les figures 1 et 1a, l'alésage 9 présente une couronne d'ancrage 10 qui fait saillie radialement depuis la paroi périphérique dudit alésage. Par ailleurs, l'embout 8 présente une empreinte annulaire complémentaire 11 qui s'étend autour dudit embout en assurant l'ancrage dudit embout sur la couronne 10.

En particulier, la couronne 10 et l'empreinte complémentaire 11 présentent respectivement une portée axiale 10a et une portée axiale complémentaire 11a qui sont formées respectivement entre deux portées radiales 10b et deux portées radiales complémentaires 11b, la portée axiale 10a épousant la portée axiale complémentaire 11a et les portées radiales 10b venant en appui axial contre les portées radiales complémentaires 11b lorsque l'embout 8 est surmoulé dans l'alésage 9.

Par ailleurs, l'alésage 9 présente au moins une gorge 12 qui s'étend circonférentiellement sur sa paroi périphérique en formant deux portées radiales externe 12a et interne 12b.

L'embout 8 présente un bourrelet complémentaire 13 qui est surmoulé dans la gorge 12 lors du surmoulage dudit embout dans l'alésage 9, ledit bourrelet présentant deux portées radiales externe 13a et interne 13b complémentaires qui sont en appui axial contre respectivement une des portées 12a, 12b de ladite gorge pour assurer un ancrage dudit embout dans ledit alésage, et ainsi assurer un bon maintien axial dudit embout dans ledit alésage.

De façon avantageuse, dans le mode de réalisation représenté, la gorge 12 est formée sur la portée axiale 10a de la couronne 10, de sorte que le bourrelet 13 est formé sur la portée axiale complémentaire 11a de l'empreinte complémentaire 11. Ainsi, grâce à la gorge 12 et au bourrelet complémentaire 13, on assure un ancrage de la couronne 10 dans l'empreinte complémentaire 11, ce qui permet de renforcer le maintien axial de l'embout 8 dans l'alésage 9 au niveau dudit ancrage.

La gorge 12 peut notamment s'étendre de façon hélicoïdale sur la portée axiale 10a, afin d'assurer une bonne cohésion statique de l'embout 8 dans l'alésage 9. En particulier, la gorge hélicoïdale 12 peut s'étendre sur sensiblement toute la longueur de la portée axiale 10a, afin de fiabiliser le maintien axial de l'embout 8 dans l'alésage 9.

Selon une réalisation, les portées 12a, 12b peuvent être inclinées pour former une gorge 12 de section triangulaire. En particulier, la gorge hélicoïdale 12 peut s'étendre suivant un pas de vis isométrique, afin d'assurer la formation dans ladite gorge d'un bourrelet complémentaire 13 régulier lors du surmoulage de l'embout 8 dans l'alésage 9.

Pour limiter le risque de formation d'espaces vides, la profondeur de la gorge 12 ne doit pas être trop importante, notamment si la résine polymère formant l'embout 8 contient des fibres. En effet, si la profondeur de la gorge 12 est trop importante, les fibres contenues dans la résine polymère risquent d'épouser plus difficilement la forme de ladite gorge, ce qui peut nuire à la formation du bourrelet complémentaire 13, et donc avoir un impact négatif sur la fiabilité de l'association de l'embout 8 dans l'alésage 9.

De façon avantageuse, comme représenté sur la figure 2, la gorge hélicoïdale 12 peut présenter une hauteur H2 qui est réduite par rapport à la hauteur H1 d'un pas de vis isométrique, notamment en satisfaisant l'inéquation suivante :

$$(1/2).H1 < H2 < (2/3).H1$$

Dans le mode de réalisation représenté, l'alésage 9 présente deux gorges 12 qui s'étendent chacune de façon hélicoïdale sur la portée axiale 10a et qui présentent des pas qui sont inversés l'un par rapport à l'autre, afin de limiter les possibilités de rotation relative de l'embout 8 par rapport à l'alésage 9, et ainsi assurer une cohésion dynamique dudit embout dans ledit alésage. En particulier, pour des cohésions statique et dynamique optimales, les gorges 12 présentent des dimensions axiales sensiblement identiques et s'étendent à elles deux sur sensiblement toute la longueur de la portée axiale 10a.

Pour améliorer davantage la tenue de l'embout 8 dans l'alésage 9, le noyau 7 peut en outre intégrer un insert qui est disposé dans l'embout 8, ledit insert étant enrobé dans la résine polymère dudit embout. En particulier, l'insert peut comprendre des fibres qui sont orientées axialement depuis le flasque 3.

En effet, un tel insert peut, grâce aux fibres orientées axialement, supporter des sollicitations élevées, notamment en flexion et en traction, et plus particulièrement dans la direction axiale. Par ailleurs, l'enrobage d'un tel insert dans la résine polymère formant l'embout 8 permet l'absorption des contraintes résiduelles subies par le fût 2, et ce d'autant plus si ladite résine polymère comprend des fibres dispersées aléatoirement.

Selon une réalisation, le fût 2 présente une bride 14 d'association à l'élément roulant sur laquelle le flasque 3 est surmoulé, ladite bride présentant des conduits 15 d'association dudit élément roulant qui débouchent dans ledit flasque.

En relation avec la figure 1, le flasque 3 s'étend axialement entre une paroi externe 3a et une paroi interne 3b, et la bride 14 s'étend radialement depuis le bord externe du fût 2 en présentant d'une seule pièce des conduits 15 qui débouchent de part et d'autre dans lesdites parois. De façon avantageuse, chacun des conduits 15 présente un jonc extérieur 16 qui est agencé pour fiabiliser l'accrochage axial des conduits 15 dans le flasque 3, et donc la cohésion du moyeu 1.

La paroi externe 3a intègre en outre une armature 17 qui présente au moins une portée annulaire 18, 19 sur laquelle l'élément roulant est destiné à être monté pour être fixé au moyeu 1. En particulier, l'armature 17 présente une portée annulaire 18 qui s'étend axialement autour de l'alésage 9 et une portée annulaire 19 qui s'étend radialement autour dudit alésage, l'élément roulant présentant un alésage qui est disposé autour de la portée annulaire 18 en assurant une concentricité parfaite du montage dudit élément roulant sur le flasque 3 avant sa fixation dans les conduits 15.

Par ailleurs, comme représenté sur la figure 1, le flasque 3 peut éventuellement comprendre une extension tubulaire 20 qui s'étend axialement au-delà de la portée 18 de l'armature 17.

L'armature 17 est enrobée dans la résine polymère du flasque 3 et comprend des fibres f qui sont orientées le long d'au moins une portée 18, 19. Selon une réalisation, l'armature 17 peut comprendre un faisceau de fibres f orientées. En variante, l'armature 17 peut être formée à partir d'une structure, par exemple tissée, stratifiée ou en sandwich, comprenant notamment les fibres f orientées.

En particulier, l'armature 17 peut être formée d'au moins une résine polymère dans laquelle les fibres f sont pré-imprégnées, ladite armature étant surmoulée par la résine du noyau 7 lors du surmoulage du fût structurel 2. En variante, l'armature 17 peut être issue d'autres techniques de fabrication de matériaux composites, par exemple par moulage, notamment par injection basse pression (RTM), ou pultrusion.

Dans le mode de réalisation représenté, les portées axiale 18 et radiale 19 comprennent des fibres f qui sont réparties sur lesdites portées en étant orientées respectivement axialement et radialement.

En particulier, les portées 18, 19 peuvent être formées à partir des mêmes fibres f, lesdites fibres comprenant chacune des portions consécutives qui sont orientées respectivement axialement et radialement pour former respectivement la portée axiale 18 et la portée radiale 19. En variante, les fibres axiales f de la portée 18 s'étendent jusqu'à la portée 19 qui comprend des fibres radiales f distinctes.

Ainsi, lorsque l'élément roulant est fixé en appui sur la paroi externe 3a du flasque 3, au moins une portée 18, 19 de l'armature 17 est interposée entre ledit élément et ladite paroi externe pour pouvoir renforcer ladite paroi, notamment relativement aux risques de déformations par fluage. En particulier, la portée annulaire 19 peut s'étendre sur sensiblement toute la paroi externe 3a en prévoyant qu'elle présente des orifices 21 dans lesquels respectivement un conduit de fixation 15 débouche.

## Revendications

1. Moyeu (1) de palier à roulement comprenant un fût structurel (2) auquel est surmoulé un noyau composite (7) réalisé à base d'au moins une résine polymère, ledit noyau présentant un flasque (3) et un embout (8) qui sont disposés respectivement autour et dans un alésage (9) dudit fût, ledit moyeu étant **caractérisé en ce que** l'alésage (9) présente au moins une gorge (12) qui s'étend circonférentiellement sur sa paroi périphérique (10a) en formant deux portées radiales (12a, 12b), l'embout (8) présentant un bourrelet complémentaire (13) qui est surmoulé dans ladite gorge pour assurer un ancrage dudit embout dans ledit alésage.

2. Moyeu (1) selon la revendication 1, **caractérisé en ce que** la gorge (12) s'étend de façon hélicoïdale sur la paroi périphérique (10a).

3. Moyeu (1) selon l'une des revendications 1 ou 2, **caractérisé en ce que** les portées radiales (12a, 12b) sont inclinées pour former une gorge (12) de section triangulaire.

4. Moyeu (1) selon les revendications 2 et 3, **caractérisé en ce que** la gorge hélicoïdale (12) s'étend suivant un pas de vis isométrique.

5. Moyeu (1) selon les revendications 2 et 3, **caractérisé en ce que** la hauteur H2 de la gorge hélicoïdale (12) satisfait à l'inéquation suivante :

$$(1/2).H1 < H2 < (2/3).H1$$

où H1 correspond à la hauteur d'un pas de vis isométrique.

6. Moyeu (1) selon l'une quelconque des revendications 1 à 5, **caractérisé en ce que** l'alésage (9) présente deux gorges (12) qui s'étendent chacune circonférentiellement sur la paroi périphérique (10a).

7. Moyeu (1) selon la revendication 6 quand elle dépend de la revendication 2, **caractérisé en ce que** les gorges (12) s'étendent chacune de façon hélicoïdale sur la paroi périphérique (10a).

8. Moyeu (1) selon la revendication 7, **caractérisé en ce que** les gorges hélicoïdales (12) présentent des pas qui sont inversés l'un par rapport à l'autre.

9. Moyeu (1) selon l'une quelconque des revendications 1 à 8, **caractérisé en ce que** l'alésage (9) comprend une couronne (10) qui fait saillie radialement depuis la paroi périphérique dudit alésage, la gorge (12) étant formée sur ladite couronne.

10. Moyeu (1) selon l'une quelconque des revendications 1 à 9, **caractérisé en ce que** le fût (2) présente une bride (14) d'association à un élément roulant sur laquelle le flasque (3) est surmoulé.

11. Moyeu (1) selon la revendication 10, **caractérisé en ce que** la bride (14) présente des conduits (15) d'association de l'élément roulant au moyeu (1), lesdits conduits débouchant dans le flasque (3).

12. Moyeu (1) selon l'une quelconque des revendications 1 à 11, **caractérisé en ce que** le noyau (7) est réalisé à base d'au moins une résine polymère chargée en fibres, lesdites fibres étant notamment dispersées aléatoirement dans ladite résine.

13. Palier à roulement pour le montage en rotation relative de deux éléments, ledit palier comprenant un moyeu (1) selon l'une quelconque des revendications 1 à 12 et un organe extérieur disposé autour dudit moyeu, ledit organe extérieur et le fût structurel (2) dudit moyeu portant chacun au moins une piste de roulement (4) qui sont disposées en regard pour réaliser au moins un chemin de roulement dans lequel une rangée de corps roulants est disposée afin de permettre la rotation relative du moyeu (1) et de l'organe extérieur.

**Patentansprüche**

1. Wälzlagernabe (1), umfassend einen strukturellen Schaft (2), auf den ein Verbundkern (7) aufgeformt ist, hergestellt auf der Grundlage von mindestens einem Polymerharz, wobei der Kern einen Flansch (3) und ein Ansatzstück (8) aufweist, die jeweils um und in einer Bohrung (9) des Schafts angeordnet sind, wobei die Nabe **dadurch gekennzeichnet ist, dass** die Bohrung (9) mindestens eine Aussparung (12) aufweist, die sich auf dem Umfang auf ihrer peripheren Wand (10a) erstreckt, indem sie zwei radiale Bereiche (12a, 12b) bildet, wobei das Ansatzstück (8) einen zusätzlichen Wulst (13) aufweist, der in der Aussparung aufgeformt ist, um eine Verankerung des Ansatzstücks in der Bohrung sicherzustellen.

2. Nabe (1) nach Anspruch 1, **dadurch gekennzeichnet, dass** sich die Aussparung (12) auf schraubenförmige Weise auf der peripheren Wand (10a) erstreckt.

3. Nabe (1) nach einem der Ansprüche 1 oder 2, **dadurch gekennzeichnet, dass** die radialen Bereiche (12a, 12b) geneigt sind, um eine Aussparung (12) mit dreieckigem Schnitt zu bilden.

4. Nabe (1) nach Anspruch 2 und 3, **dadurch gekennzeichnet, dass** sich die schraubenförmige Aussparung (12) gemäß einem isometrischen Schraubengang erstreckt.

**5.** Nabe (1) nach Anspruch 2 und 3, **dadurch gekennzeichnet, dass** die Höhe H2 der schraubenförmigen Aussparung (12) der folgenden Ungleichung genügt:

$$(1/2).H1 < H2 < (2/3).H1$$

wobei H1 der Höhe eines isometrischen Schraubengangs entspricht.

**6.** Nabe (1) nach einem der Ansprüche 1 bis 5, **dadurch gekennzeichnet, dass** die Bohrung (9) zwei Aussparungen (12) aufweist, die sich jeweils auf dem Umfang auf der peripheren Wand (10a) erstrecken.

**7.** Nabe (1) nach Anspruch 6, wenn sie von Anspruch 2 abhängt, **dadurch gekennzeichnet, dass** sich die Aussparungen (12) jeweils auf schraubenförmige Weise auf der peripheren Wand (10a) erstrecken.

**8.** Nabe (1) nach Anspruch 7, **dadurch gekennzeichnet, dass** die schraubenförmigen Aussparungen (12) Gänge aufweisen, die mit Bezug aufeinander umgekehrt sind.

**9.** Nabe (1) nach einem der Ansprüche 1 bis 8, **dadurch gekennzeichnet, dass** die Bohrung (9) eine Krone (10) umfasst, die radial von der peripheren Wand der Bohrung hervorspringt, wobei die Aussparung (12) auf der Krone gebildet ist.

**10.** Nabe (1) nach einem der Ansprüche 1 bis 9, **dadurch gekennzeichnet, dass** der Schaft (2) eine Klammer (14) zur Assoziierung an ein rollendes Element aufweist, auf dem der Flansch (3) aufgeformt ist.

**11.** Nabe (1) nach Anspruch 10, **dadurch gekennzeichnet, dass** die Klammer (14) Leitungen (15) zur Assoziierung des rollenden Elements an die Nabe (1) umfasst, wobei die Leitungen in den Flansch (3) münden.

**12.** Nabe (1) nach einem der Ansprüche 1 bis 11, **dadurch gekennzeichnet, dass** die Nabe (7) auf der Grundlage von mindestens einem Polymerharz hergestellt ist, das mit Fasern verstärkt ist, wobei die Fasern insbesondere zufällig in dem Harz dispergiert sind.

**13.** Wälzlager zur Montage in relativer Drehung von zwei Elementen, wobei das Lager eine Nabe (1) nach einem der Ansprüche 1 bis 12 und ein äußeres Organ umfasst, das um die Nabe angeordnet ist, wobei das äußere Organ und der strukturelle Schaft (2) der Nabe jeweils mindestens eine Rollspur (4) umfassen, die gegenüber liegend angeordnet ist, um mindestens einen Rollweg durchzuführen, in dem ein Bereich von rollenden Körpern angeordnet ist, um die relative Drehung der Nabe (1) und des äußeren Organs zu ermöglichen.

## Claims

**1.** Roller bearing hub (1) comprising a structural shaft (2) to which is over-moulded a composite core (7) made from a base of at least one polymer resin, said core having a flange (3) and a nozzle (8) which are arranged respectively around and in a bore (9) of said shaft, said hub being **characterised in that** the bore (9) has at least one recess (12) which extends circumferentially over its peripheral wall (10a) by forming two radial supports (12a, 12b), the nozzle (8) having an additional protrusion (13) which is over-moulded in said recess to ensure an anchorage of said nozzle in said bore.

**2.** Hub (1) according to claim 1, **characterised in that** the recess (12) extends helicoidally over the peripheral wall (10a).

**3.** Hub (1) according to one of the claims 1 or 2, **characterised in that** the radial supports (12a, 12b) are tilted to form a triangular section recess (12).

**4.** Hub (1) according to claims 2 and 3, **characterised in that** the helicoidal recess (12) extends along an isometric screw thread.

**5.** Hub (1) according to claims 2 and 3, **characterised in that** the height H2 of the helicoidal recess (12) satisfies the following inequation:

$$(1/2).H1 < H2 < (2/3).H1$$

where H1 corresponds to the height of an isometric screw thread.

**6.** Hub (1) according to any one of the claims 1 to 5, **characterised in that** the bore (9) has two recesses (12) which each extend circumferentially over the peripheral wall (10a).

**7.** Hub (1) according to claim 6 when it depends on claim 2, **characterised in that** the recesses (12) each extend helicoidally over the peripheral wall (10a).

**8.** Hub (1) according to claim 7, **characterised in that** the helicoidal recesses (12) have threads which are inverted against each other.

9. Hub (1) according to any one of the claims 1 to 8, **characterised in that** the bore (9) comprises a crown (10) which radially protrudes from the peripheral wall of said bore, the recess (12) being formed on said crown.

10. Hub (1) according to any one of the claims 1 to 9, **characterised in that** the shaft (2) has a clip (14) connected to a rolling element whereon the flange (3) is over-moulded.

11. Hub (1) according to claim 10, **characterised in that** the clip (14) has ducts (15) connected to the rolling element of the hub (1), said ducts leading to the flange (3).

12. Hub (1) according to any one of the claims 1 to 11, **characterised in that** the core (7) is made from a base of at least one polymer resin filled with fibres, said fibres being particularly dispersed randomly in said resin.

13. Roller bearing for rotating assembly relating to two elements, said bearing comprising an hub (1) according to any one of the claims 1 to 12, and an exterior body arranged around said hub, said exterior body and structural shaft (2) of said hub each holding at least one rolling track (4) which are arranged opposite each other to form at least one rolling path wherein a row of rolling bodies is arranged in order to enable the relative rotation of the hub (1) and the exterior body.

Fig. 1

Fig. 1a

Fig. 2

**EP 3 106 318 B1**

**Documents brevets cités dans la description**

- EP 2863082 A